Europäisches Patentamt

European Patent Office

Office européen des brevets

(11) Numéro de publication: **0 410 852 A1**

## DEMANDE DE BREVET EUROPEEN

(21) Numéro de dépôt: 90402085.6

(22) Date de dépôt: 20.07.90

(51) Int. Cl.5: **B29C 53/60**, B29C 47/32, B29C 47/16

(30) Priorité: 25.07.89 FR 8909976

(43) Date de publication de la demande: 30.01.91 Bulletin 91/05

(84) Etats contractants désignés: DE GB IT

(71) Demandeur: **AEROSPATIALE Société Nationale Industrielle**
**37, Boulevard de Montmorency**
**F-75016 Paris(FR)**

(72) Inventeur: **Bonnefoy, Philippe**
**Chemin de la Magnane**
**F-33480 Castelnau(FR)**

(74) Mandataire: **Lepeudry-Gautherat, Thérèse et al**
**ARMENGAUD JEUNE CABINET LEPEUDRY 6, rue du Faubourg Saint Honoré**
**F-75008 Paris(FR)**

(54) Procédé et dispositif de revêtement de protection thermique interne de propulseur.

(57) Une tête d'extrudeuse (12) est montée sur une extrudeuse (10) à proximité immédiate du mandrin (3), et porte à son extrémité un galet (14) à axe horizontal, dont la partie supérieure affleure à l'intérieur du conduit de sortie (25), tandis qu'à l'aplomb du galet, la tête d'extrudeuse porte une trappe coulissante (13) se terminant par une arête profilée (26) débordant à l'intérieur du conduit, et pouvant pénétrer plus ou moins à l'intérieur de celui-ci.

Application aux revêtements de propulseur à propergol solide.

FIG.2

La présente invention concerne un procédé et un dispositif pour réaliser un revetement de protection thermique de propulseurs notamment de propulseurs à propergol solide.

La structure résistante, par exemple en matériau composite, des propulseurs, doit être garnie intérieurement d'un revêtement de protection thermique en élastomère apte à remplir deux fonctions essentielles : d'une part isoler thermiquement l'enveloppe en composite du bloc de propergol pendant sa phase de combustion, d'autre part assurer l'étanchéité de l'enveloppe en composite contre les fuites de gaz. L'épaisseur de ce revêtement de protection doit varier le long de la génératrice du propulseur et notamment être plus importante dans les zones les plus exposées telles que l'avant et l'arrière du corps du propulseur.

Pour appliquer ces revêtements de protection les méthodes automatiques ont aujourd'hui largement remplacé les procédés manuels de découpe et de drapage de feuilles d'élastomère, qui conféraient à cette technologie, grande consommatrice de matière, un coût de mise en oeuvre élevé. Parmi ces méthodes automatiques connues, on peut en retenir essentiellement deux.

Une première consiste à recouvrir un mandrin d'une couche d'élastomère avant de former par enroulement filamentaire de matériau composite, la cuve proprement dite. Le brevet EP 0 094 805 décrit une telle fabrication dans laquelle la couche d'élastomère est réalisée par dépose d'un ruban extrudé à épaisseur variable, à l'aide d'un applicateur orientable par rapport à une perpendiculaire à l'axe de rotation du mandrin, pour que les bandes successives soient déposées en position continue par adhérence, suivant une direction sensiblement circulaire, le long de la génératrice du mandrin. Le léger chevauchement des bandes voisines, notamment dans la zone des fonds ou des extrémités de la cuve, présentant une courbure accentuée, entraîne des surépaisseurs de bande et de ce fait un profil extérieur de protection thermique pouvant présenter des discontinuités, avec des risques d'occlusion d'air. En outre le mécanisme est complexe à cause de l'éloignement de l'extrudeuse par rapport au mandrin.

Une seconde méthode consiste à appliquer directement le revêtement sur la paroi interne du propulseur. Une installation permettant la mise en oeuvre de cette méthode, telle que décrite dans le FR-A 2 614 651, revêt aussi une complexité particulière notamment par le fait que la distance que doit parcourir la bande caoutchouc entre sa sortie de filière et son point d'application le long de la génératrice du propulseur est variable selon que l'on est dans la zone cylindrique ou dans les fonds, ce qui implique des mécanismes complexes pour orienter en bonne place le dispositif d'application.

De plus, la tension de la bande de caoutchouc nécessaire à la régulation de la vitesse de rotation du propulseur provoque des variations dimensionnelles de cette bande, dues à son étirage ce qui est préjudiciable pour les faibles épaisseurs.

Une installation de ce type présente aussi l'inconvénient qu'on dépose par cette méthode une épaisseur de revêtement souvent supérieure à celle souhaitée ce qui oblige à réusiner le profil après vulcanisation.

L'invention apporte une solution à ce problème et permet de s'affranchir des inconvénients précités, inhérents à ces méthodes connues.

Un premier objet de l'invention concerne donc un procédé pour réaliser un revêtement de protection thermique de propulseur par application sur la surface externe d'un mandrin d'une bande d'élastomère avant l'enroulement filamentaire d'une enveloppe, procédé selon lequel on extrude ladite bande d'élastomère au plus près et à portée immédiate du mandrin, on ajuste l'épaisseur de la bande en cours d'extrusion, on revêt la surface externe du mandrin par le dépot en continu d'une ou plusieurs bandes jointives en spirale et on vulcanise le revêtement de protection thermique ainsi obtenu avant l'enroulement de l'enveloppe ou après l'enroulement de l'enveloppe simultanément avec sa polymérisation.

Un autre objet de l'invention concerne un dispositif pour réaliser un revêtement de protection thermique de propulseur selon lequel la tête d'extrudeuse est montée sur une extrudeuse, à proximité immédiate du mandrin, ladite extrudeuse pouvant se déplacer, parallèlement à l'arbre rotatif du mandrin, transversalement à cet arbre et en pivotant de ± 90° par rapport à un axe transversal perpendiculaire à l'arbre rotatif. Plus précisément l'extrudeuse est montée, par l'intermédiaire d'un axe de rotation, sur un chariot pouvant se déplacer transversalement sur un autre chariot, lui-même déplaçable sur un banc longitudinal.

Selon une caractéristique particulière de l'invention, le caoutchouc est mélangé dans le corps de l'extrudeuse par une vis sans fin qui achemine le mélange sous pression jusqu'à la tête d'extrudeuse à l'intérieur d'un conduit de sortie, la tête d'extrudeuse étant équipée de résistances de chauffage et d'une sonde de température.

Selon une caractéristique principale de l'invention, la tête d'extrudeuse porte à son extrémité un galet à axe horizontal dont la partie supérieure affleure à l'intérieur du conduit de sortie, et à l'aplomb dudit galet la tête d'extrudeuse porte une trappe coulissante se terminant par une arête profilée débordant à l'intérieur du conduit, et pouvant pénétrer plus ou moins à l'intérieur de celui-ci, l'arête de la trappe étant parallèle ou inclinée par rapport à l'axe de rotation du galet.

Le bobinage d'au moins une bande de caoutchouc est assuré à partir du talon d'un renfort placé dans la zone de fond du mandrin, et en direction du corps cylindrique dudit mandrin et plus précisément, la largeur de la bande de caoutchouc est déposée dans le plan tangent à la surface de la zone de fond suivant un enroulement à spires jointives orienté à 90° au pas près par rapport à l'arbre du mandrin.

D'autres caractéristiques particulières et avantages de l'invention ressortiront de la description suivante qui fait référence aux dessins annexés qui représentent :

Figure 1 une vue d'ensemble du dispositif de revêtement.

Figure 2 une vue en coupe de l'extrudeuse et à plus grande échelle à la figure 3 la tête d'extrudeuse.

Figures 4 et 5 des vues schématiques en bout de la tête d'extrudeuse.

Figure 6 une vue en coupe d'une variante de tête d'extrudeuse.

Figure 7 une vue d'une extrémité de mandrin muni de son revêtement et

Figure 8 une vue agrandie d'une partie de la zone de fond selon la figure 7.

Figure 9 une variante de la réalisation de la figure 7.

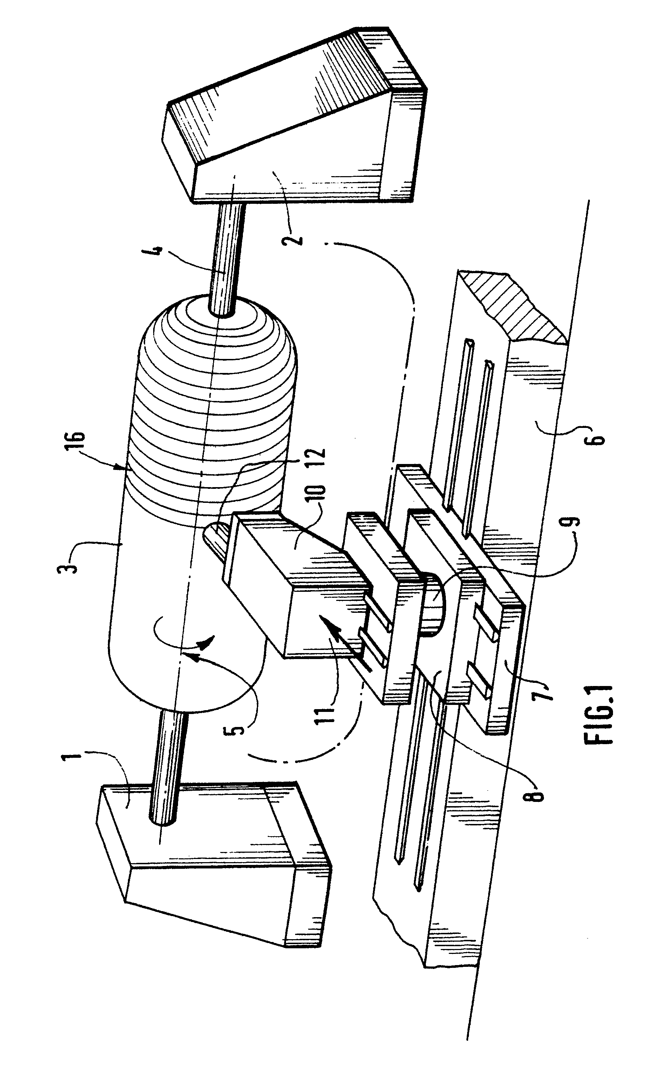

On a représenté à la figure 1 un ensemble d'installation servant au revêtement d'une bande de caoutchouc 16 sur un mandrin 3 monté sur un arbre rotatif 4 maintenu par une poupée motrice 1 et un bâti mobile 2, le mandrin pouvant tourner dans le sens de la flèche 5. Parallèlement au mandrin est prévu un banc longitudinal 6 servant de support à un chariot 7 apte à se déplacer longitudinalement sur ledit banc, lequel porte lui-même un chariot 8 qui se déplace sur lui transversalement à l'axe du banc et du mandrin. Le chariot 8 supporte une extrudeuse 10 montée sur un axe 9 autorisant une rotation de ladite extrudeuse de ± 90° par rapport à un axe transversal, c'est-à-dire par rapport à la perpendiculaire à l'arbre de rotation. Enfin la tête d'extrudeuse 12 est susceptible de se déplacer avec l'extrudeuse 10 par rapport au chariot 8 sous l'action d'une pression matérialisée par la flèche 11, pour venir en contact contre le mandrin 3. On note qu'ainsi, ladite tête d'extrudeuse peut se déplacer parallèlement à l'arbre rotatif du mandrin, mais aussi transversalement à cet arbre ainsi qu'en pivotant par rapport à un axe transversal perpendiculaire à l'arbre rotatif.

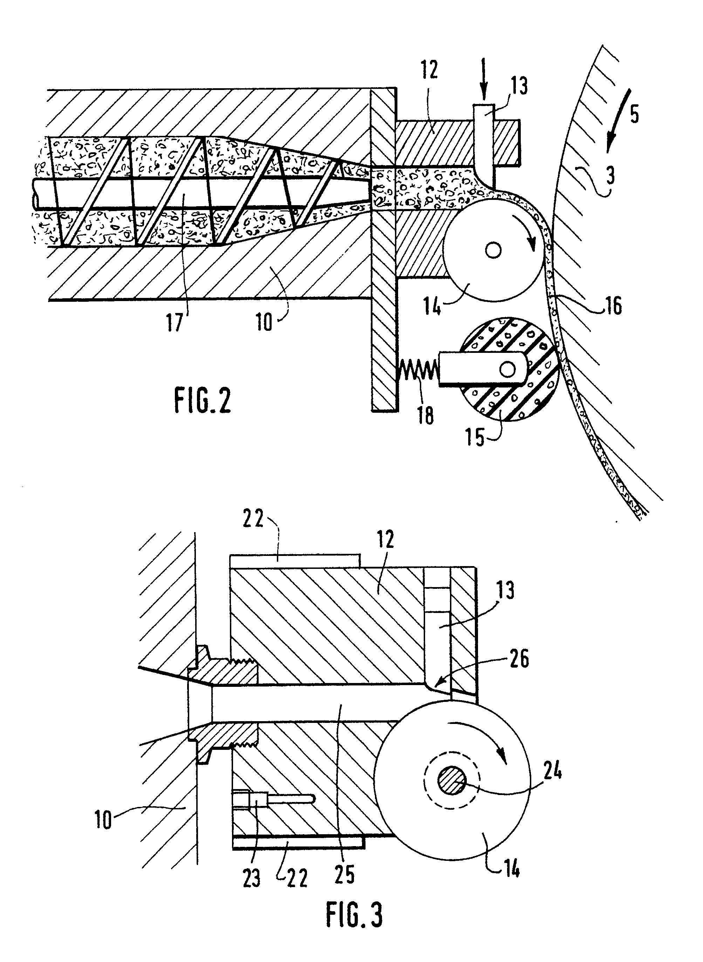

On voit à la figure 2 la tête d'extrudeuse 12 à proximité immédiate du mandrin 3 tournant dans le sens de la flèche 5. Le caoutchouc est mélangé et déplacé dans le corps de l'extrudeuse 10 par une vis sans fin 17 qui achemine le mélange cru, sous pression jusqu'à la tête d'extrudeuse 12, à l'intérieur d'un conduit de sortie 25.

La représentation à plus grande échelle de la figure 3 montre que la tête d'extrudeuse 12 est équipée de résistances de chauffage 22 et d'une sonde de température 23. Elle porte également à son extrémité un galet chromé 14 à axe horizontal 24, galet dont la partie supérieure pénètre légèrement à l'intérieur du conduit de sortie 25 du caoutchouc. A proximité de l'orifice de sortie dudit conduit 25 et à sa partie supérieure, à l'aplomb du galet 14, la tête d'extrudeuse 12 porte une trappe coulissante 13 se terminant par une arête profilée 26 débordant à l'intérieur du conduit 25. La trappe peut se déplacer verticalement par rapport à la tête d'extrudeuse pour pénétrer plus ou moins à l'intérieur du conduit.

On comprend que le caoutchouc comprimé dans le conduit 25 par la vis sans fin 17 est extrudé en sortie de la tête 12 et fournira une bande de caoutchouc 16 dont l'épaisseur sera fonction de la hauteur de l'arête 26 de la trappe 13 par rapport au galet 14. On peut obtenir ainsi une bande extrudée d'épaisseur voulue. On dispose avantageusement sous le galet 14 un second galet 15, en matériau souple, qu'un ressort 18 maintient appliqué contre le mandrin 3. Le nature du matériau du galet 15 est choisie pour permettre à la bande de caoutchouc 16 une légère déformation à la dépose et épouser parfaitement la surface à recouvrir.

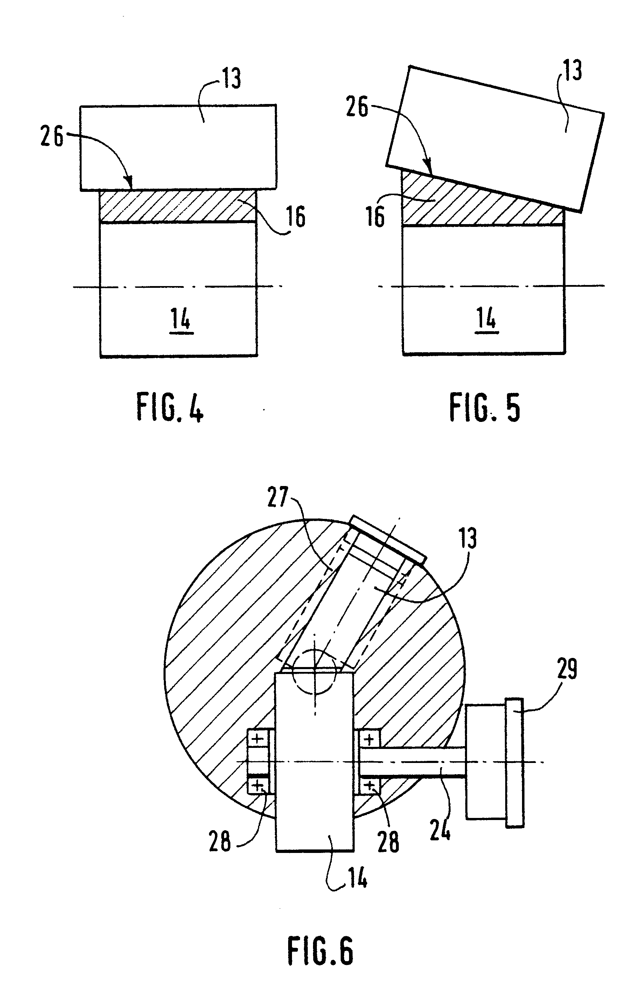

Dans l'exemple schématique illustré à la figure 4, l'arête 26 de la trappe 13 est parallèle à l'axe 24 de rotation du galet 14. On obtient ainsi une bande de caoutchouc 16 de section rectangulaire. Dans la variante représentée aux figures 5 et 6, l'arête 26 de la trappe 13 est inclinée par rapport à l'axe 24 du galet 14 et permet d'obtenir un ruban de section trapézoïdale On voit plus précisément à la figure 6 le profil de la trappe 13 coulissant dans un puits 27 incliné par rapport au plan supérieur du galet 14. On remarquera le montage de l'axe 24 sur des roulements 28, l'axe étant entraîné par un pignon 29.

Selon une variante de réalisation non représentée le galet 14 pourrait ne pas être entraîné par un moteur; sa rotation se ferait alors sous l'action de la poussée du caoutchouc se déplaçant dans le conduit 25 et/ou sous l'action d'entraînement due au mandrin 3.

Une commande numérique asservi l'ensemble de ces fonctions. Les déplacements du chariot 7 sur l'axe longitudinal du banc 6, du chariot 8 sur le chariot 7 transversalement, ainsi que la rotation de l'extrudeuse lu sur l'axe 9 sont gérés par un programme dans la commande numérique. En fonction de la position et de la vitesse du galet 14, le débit de l'extrudeuse varie par modification de la vitesse de rotation de la vis 17. La vitesse du mandrin 3 est également variable sur son arbre 4. De plus, l'épaisseur de la bande de caoutchouc varie selon l'espacement donné entre l'arête 26 de la trappe 13 et le galet 14.

A l'aide du dispositif précédemment décrit, on est donc en mesure de revêtir la surface externe d'un mandrin, d'une protection thermique interne de corps de propulseur ayant un profil extérieur fini. Cela est fait par dépose jointive en spirale d'une ou plusieurs couches d'une bande de caoutchouc extrudée et délivrée par le galet qui s'applique sur le mandrin et dont la génératrice constitue l'un des côtés de la filière d'extrusion. Le procédé a l'avantage de délivrer sans tension la bande de caoutchouc qui au contact du mandrin est appliquée sous pression. L'installation et la régulation du moyen de dépose sont simplifiés et améliorés puisque la variation de distance entre l'extrusion de la bande de caoutchouc jusqu'à son point d'application, et la tension de ladite bande sont minimes et ne sont plus à prendre en compte comme dans les réalisations antérieures connues. On relèvera que la longueur de la bande extrudée entre sa sortie de l'extrudeuse, au niveau de la trappe de sortie 13, et le mandrin 3 est, dans le cas représenté à la figure 2, égale au quart de la circonférence du galet 14. En fonction de l'inclinaison de l'extrudeuse par rapport à la surface du mandrin cette longueur peut varier dans une limite qui de toute façon ne dépasserait pas la moitié de la circonférence du galet. La distance entre l'extrusion de la bande et son point d'application est donc bien une distance aussi minime que possible.

L'invention apporte également une bonne géométrie du profil extérieur de la protection thermique sous enveloppe puisque la bande de caoutchouc est déposée à spires jointives et son épaisseur est adaptée au fur et à mesure du besoin, on comprend que pour rechercher un revêtement à épaisseur évolutive, on soit conduit à déposer un ruban de section trapézoïdale, ainsi, l'opération d'usinage de la protection thermique avant bobinage de l'enveloppe n'est plus nécessaire. De plus, on comprend qu'ainsi l'opération de vulcanisation de la protection thermique peut indifféremment être envisagée, soit avant bobinage de l'enveloppe, soit après bobinage de celle-ci en opération simultanée de la polymérisation de l'enveloppe. (Avec les systèmes connus l'opération d'usinage de la protection thermique ne pouvait être envisagée qu'après vulcanisation de celle-ci).

En résumé l'invention permet le dépôt d'une bande à plat à spires jointives sur la paroi du mandrin, par extrusion au plus près de son point d'application sur le mandrin, grâce à une tête d'extrusion originale permettant de faire varier l'épaisseur de la bande et de l'appliquer sur le mandrin. Ainsi peut-on s'affranchir des inconvénients inhérents aux techniques connues.

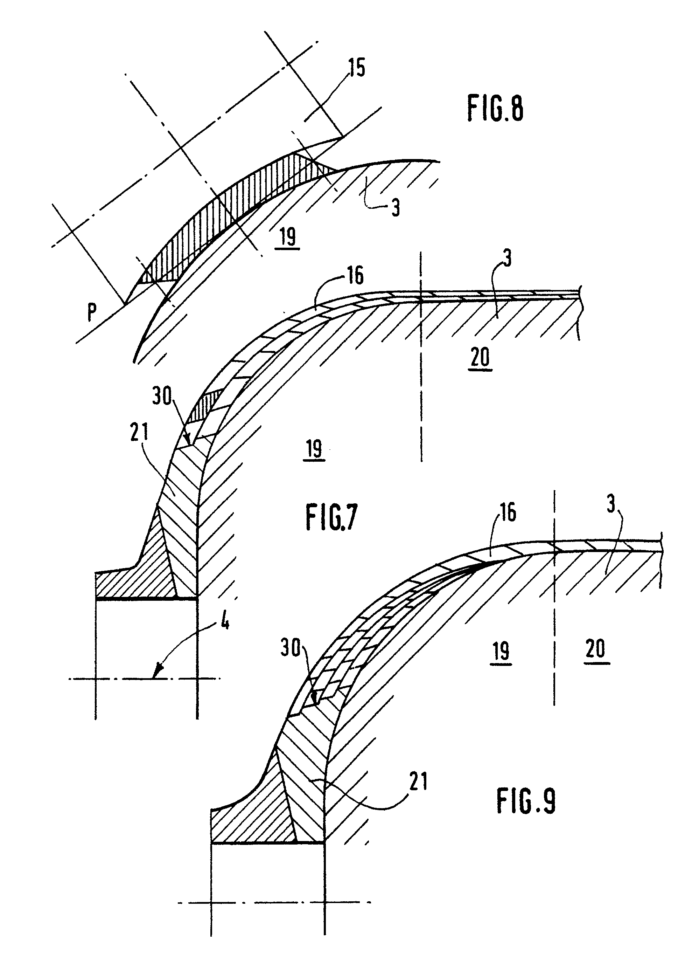

La figure 7 montre une partie d'une zone de fond 19 et du corps cylindrique 20 d'un propulseur muni d'une protection thermique interne. La zone de fond présente un renfort 21 de largeur plus importante que la partie courante du corps cylindrique. Ce renfort 21 forme un talon annulaire 30 à partir duquel, en direction du corps cylindrique 20, sont enroulées les couches de caoutchouc 16, qui dans l'exemple représenté sont au nombre de deux. La réalisation d'une couche complète s'effectue en faisant l'opération inverse dans l'autre fond non représenté. La largeur de la bande de caoutchouc 16 est déposée, comme on le voit à la figure 8 dans le plan tangent P à la surface de la zone de fond 19 suivant un enroulement à spires jointives orienté à 90° au pas près par rapport à l'arbre 4 du mandrin. On utilise avantageusement un galet applicateur 15 en matériau souple pour réaliser les parties déformées en bordure de bande. Ainsi l'épaisseur est ajustée en tout point de la surface à recouvrir. Les couches sont décalées, par exemple d'un demi-pas, pour alterner les plans de joints.

La figure 9 illustre une autre variante de réalisation. Dans ce cas la dépose de quatre bandes 16 débute comme précédemment, à partir du talon 30 du renfort 21 pour aller vers le corps cylindrique 20, mais les bandes sont d'épaisseurs décroissantes à partir de la zone de fond 19 et au fur et à mesure que l'on s'approche de cette partie cylindrique, sauf en ce qui concerne la dernière couche qui peut être à épaisseur constante et recouvrir la totalité de la surface à protéger. En outre chaque couche est décalée pour alterner les plans de joints.

On a décrit l'invention sur la base de la réalisation d'une protection thermique interne d'un propulseur par application sur un mandrin, mais l'invention ne se limite pas à cela et pourrait s'appliquer à la réalisation de tout revêtement, autre qu'une protection thermique sur l'extérieur d'une pièce ayant des caractéristiques approchantes à celles de l'extérieur du mandrin décrit, comme par exemple sur l'intérieur d'une enveloppe par l'intermédiaire d'un mandrin avant bobinage, ou tout autre recouvrement, permettant de réaliser l'enveloppe extérieure.

## Revendications

1.- Dispositif pour réaliser un revêtement de protection thermique de propulseur par application sur la surface externe d'un mandrin d'une bande d'élastomère avant l'enroulement filamentaire d'une enveloppe en composite, à l'aide d'une extrudeuse disposée à proximité immédiate d'un mandrin, et pouvant se déplacer parallèlement à l'arbre rotatif dudit mandrin, caractérisé en ce que la tête (12) de l'extrudeuse (10) peut également se déplacer transversalement à l'arbre rotatif (4) du mandrin, et en pivotant de ± 90° par rapport à un axe transversal perpendiculaire audit arbre par le fait qu'elle est montée, par l'intermédiaire d'un axe de rotation (9), sur un chariot (8) pouvant se déplacer transversalement sur un chariot (7), lui-même déplaçable sur un banc longitudinal (6).

2.- Dispositif selon la revendication 1, caractérisé en ce que le caoutchouc est mélangé et déplacé dans le corps de l'extrudeuse (10) par une vis sans fin (17) qui achemine le mélange sous pression jusqu'à la tête d'extrudeuse (12), à l'intérieur d'un conduit de sortie (25).

3.- Dispositif selon la revendication 1, caractérisé en ce que la tête d'extrudeuse (12) est équipée de résistances de chauffage (22) et d'une sonde de température (23).

4.- Dispositif selon la revendication 1, caractérisé en ce que la tête d'extrudeuse (12) porte à son extrémité un galet (14) à axe horizontal (24), dont la partie supérieure pénètre légèrement à l'intérieur du conduit de sortie (25) et en ce que, à l'aplomb dudit galet, la tête d'extrudeuse porte une trappe coulissante (13) se terminant par une arête profilée (26) débordant à l'intérieur du conduit, et pouvant pénétrer plus ou moins à l'intérieur de celui-ci.

5.- Dispositif selon la revendication 4, caractérisé en ce que l'arête (26) de la trappe (13) est parallèle à l'axe (24) de rotation du galet (14).

6.- Dispositif selon la revendication 4, caractérisé en ce que l'arête (26) de la trappe (13) est inclinée par rapport à l'axe (24) de rotation du galet (14).

7.- Dispositif selon les revendications 4 et 6, caractérisé en ce que la trappe (13) coulisse dans un puits (27) incliné par rapport au plan supérieur du galet (14).

8.- Dispositif selon la revendication 4, caractérisé en ce qu'un second galet (15) en matériau souple est disposé sous le galet (14) et est appliqué contre le mandrin (3) par un ressort (18).

9.- Procédé pour réaliser un revêtement de protection thermique de propulseur à l'aide du dispositif selon l'une quelconque des revendications 1 à 8, en assurant le bobinage d'au moins une bande de caoutchouc à partir du talon d'un renfort placé dans la zone de fond du mandrin, caractérisé en ce que la largeur de la bande de caoutchouc (16) est déposée dans le plan tangent P à la surface de la zone de fond (19) suivant un enroulement à spires jointives orienté à 90° au pas près du rapport à l'arbre (4) du mandrin, et en ce que l'on vulcanise le revêtement de protection thermique ainsi obtenu avant l'enroulement de l'enveloppe ou après l'enroulement de l'enveloppe simultanément avec sa polymérisation.

FIG.1

FIG.2

FIG.3

FIG. 4

FIG. 5

FIG.6

FIG.8

FIG.7

FIG.9

**Office européen des brevets**

# RAPPORT DE RECHERCHE EUROPEENNE

Numéro de la demande

## EP 90 40 2085

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 264 600   (MICHELIN & CIE) <br> * Colonne 8, lignes 16-20; revendications 1,3,4,6,8-10; figures * <br> — — — | 1-3,9 | B 29 C 53/60 <br> B 29 C 47/32 <br> B 29 C 47/16 |
| Y | | 4-8 | |
| Y | FR-A-7 616 54   (W. STELKENS) <br> * Figures * <br> — — — | 4-8 | |
| A,D | EP-A-0 094 805   (HERCULES INC.) <br> * Page 5, lignes 9-11; abrégé; figures * <br> — — — | 1-4,8 | |
| A | GB-A-1 067 622   (PIRELLI SpA) <br> * Revendications; figures * <br> — — — | 1,9 | |
| A | FR-A-1 426 617   (CONTINENTAL GUMMI-WERKE AG) <br> * Figures * <br> — — — | 1,4,8,9 | |
| A | CH-A-2 475 00   (A. ROTHFUCHS) <br> * Figure 1 * <br> — — — | 1,2,4 | |
| A,D | FR-A-2 614 651   (SOCIETE EUROPEENNE DE PROPULSION) <br> * Figures * <br> — — — | 1,9 | **DOMAINES TECHNIQUES RECHERCHES (Int. Cl.5)** <br><br> B 29 C |
| A | AU-B-5 402 92   (THE KENDALL CO.) <br> * Figures * <br> — — — — — | 1,9 | |

Le présent rapport de recherche a été établi pour toutes les revendications

| Lieu de la recherche | Date d'achèvement de la recherche | Examinateur |
|---|---|---|
| La Haye | 02 novembre 90 | BELIBEL C. |